# FASCICULE DE BREVET EUROPEEN

(11) **EP 4 441 424 B1**
(45) Date de publication et mention de la délivrance du brevet: **07.10.2026**
(21) Numéro de dépôt: 22802684.5
(22) Date de dépôt: 25.10.2022
(51) Int. Cl.: F21S 43/239, F21S 43/243, F21V 8/00

(54) **DISPOSITIF D'ÉCLAIRAGE À GUIDES DE LUMIÈRE VOISINS NON PARASITÉS PAR LEURS PHOTONS**
BELEUCHTUNGSVORRICHTUNG MIT BENACHBARTEN LICHTLEITERN, DIE NICHT DURCH PHOTONEN DAVON UNTERBROCHEN WERDEN
LIGHTING DEVICE WITH NEIGHBOURING LIGHT GUIDES NOT DISRUPTED BY THE PHOTONS THEREOF

(30) Priorité: 01.12.2021 FR 2112802
(43) Date de publication de la demande: 09.10.2024
(73) Titulaire: Stellantis Auto SAS, 78300 Poissy (FR)
(72) Inventeur: SCHNURIGER, Damien, 91570 BIEVRES (FR)
(74) Mandataire: ESIP
(86) Numéro de dépôt international: PCT/FR2022/052020
(87) Numéro de publication internationale: WO 2023/099827

(56) Documents cités:
- EP-A1- 2 853 803
- EP-A1- 3 453 947
- EP-A2- 2 924 479
- WO-A1-2017/068309
- JP-A- 2013 037 963

## Description

### Domaine technique de l'invention

L'invention concerne les dispositifs d'éclairage qui comprennent une source de photons et deux guides de lumière voisins et devant participer à la réalisation d'au moins une fonction photométrique.

### Etat de la technique

Dans ce qui suit, on entend par « fonction photométrique » aussi bien une fonction photométrique de signalisation, qu'une fonction photométrique d'éclairage ou qu'une fonction photométrique d'effet lumineux, éventuellement décoratif.

Dans certains domaines, comme par exemple celui des véhicules, éventuellement de type automobile, on utilise des dispositifs d'éclairage comprenant des premier et second guides de lumière placés l'un à côté de l'autre (éventuellement l'un au-dessus de l'autre) et recevant des photons générés par au moins une source de photons. Chacun des premier et second guides de lumière comprend une première partie recevant les photons générés afin de les transférer dans une seconde partie comportant des première et seconde faces de réflexion interne, opposées entre elles et sur lesquelles les photons transférés font l'objet de réflexions internes multiples jusqu'à ce qu'ils parviennent au niveau d'une face d'extrémité par laquelle ils sortent pour participer à une fonction photométrique.

La seconde face de réflexion interne du premier guide de lumière étant placée en regard de la première face de réflexion interne du second guide de lumière, il arrive que des photons sortent du premier guide de lumière par sa seconde face de réflexion interne et pénètrent dans le second guide de lumière par sa première face de réflexion interne, et inversement. Par conséquent, les premier et second guides de lumière se parasitent mutuellement en raison de leurs fuites de lumière (ou photons) respectives, ce qui peut se traduire soit par une plus grande intensité lumineuse sur l'une des deux faces d'extrémité des premier et second guides de lumière lorsqu'ils participent tous les deux à une même fonction photométrique, soit par une intensité lumineuse très faible et indésirable sur la face d'extrémité du premier ou second guide de lumière qui ne doit pas participer à sa fonction photométrique, lorsque les premier et second guides de lumière participent à deux fonctions photométriques différentes.

Afin d'empêcher ce transfert de photons (ou parasitage mutuel) entre les premier et second guides de lumière, il a été proposé d'installer entre ces derniers un séparateur qui est opaque aux photons guidés dans l'une au moins de leurs secondes parties. Généralement, ce séparateur est une pièce additionnelle qui est soit définie par une injection multiple (les matériaux définissant respectivement la zone optique de guidage et le séparateur étant injectés dans un moule lors de deux opérations distinctes), soit une pièce rapportée fixée par clippage ou vissage.

La première alternative (injection multiple ou surmoulage) nécessite l'utilisation d'outillages complexes multi-matériaux, ce qui est onéreux, et produit un séparateur qui occupe un volume dédié entre les premier et second guides de lumière, ce qui réduit le volume technique disponible.

La seconde alternative (pièce rapportée) nécessite la définition de moyens de clippage ou de trous filetés, ce qui complexifie et augmente le coût des moules, nécessite des interventions de techniciens, ce qui s'avère onéreux, et requiert entre les premier et second guides de lumière un volume dédié encore plus grand que dans la première alternative, ce qui réduit encore plus le volume technique disponible.

En outre, l'état de la technique est connu du document EP2924479A2. L'invention a donc notamment pour but d'améliorer la situation.

### Présentation de l'invention

Elle propose notamment à cet effet un dispositif d'éclairage comprenant une source générant des photons, un premier guide de lumière recevant dans une première partie les photons générés afin de les transférer dans une seconde partie comportant des première et seconde faces de réflexion interne, opposées entre elles, et une face d'extrémité par laquelle sortent les photons transférés, et un second guide de lumière placé en regard de cette seconde face de réflexion interne.

Ce dispositif d'éclairage se caractérise par le fait que la seconde partie du premier guide de lumière comprend au niveau de sa seconde face de réflexion interne un logement ouvert du côté du second guide de lumière et logeant intégralement une pièce de protection propre à limiter au moins une sortie de photons transférés par la seconde face de réflexion interne afin de protéger au moins le second guide de lumière.

Grâce à l'invention, au moins le premier guide de lumière ne parasite pas le second guide de lumière (et possiblement réciproquement), et le volume technique disponible est au minimum très peu (et possiblement pas du tout) réduit du fait du logement au moins partiel de la pièce de protection dans le logement.

Le dispositif d'éclairage selon l'invention peut comporter d'autres caractéristiques qui peuvent être prises séparément ou en combinaison, et notamment :
- la pièce de protection peut être maintenue dans le logement par le second guide de lumière ;
- en présence de la dernière option, le second guide de lumière peut comprendre au moins une protubérance saillant vers la pièce de protection et au contact de cette dernière afin de la maintenir dans le logement ;
- la pièce de protection peut être réalisée dans un matériau qui est opaque au moins aux photons générés par la source ;
- l'un au moins des premier et second guides de lumière peut être de type dit plat.

L'invention propose également un bloc optique propre à équiper un véhicule et comprenant au moins un dispositif d'éclairage du type de celui présenté ci-avant.

Par exemple, les photons sortant par la face d'extrémité du premier guide de lumière peuvent participer à une fonction photométrique de signalisation. Egalement par exemple, ce bloc optique peut être un feu arrière.

L'invention propose également un véhicule, éventuellement de type automobile, et comprenant au moins un bloc optique du type de celui présenté ci-avant.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en coupe dans un plan vertical et longitudinal, une partie d'un exemple de réalisation d'un bloc optique comprenant un exemple de réalisation d'un dispositif d'éclairage selon l'invention,
[Fig. 2] illustre schématiquement, dans une vue en perspective, une partie du dispositif d'éclairage de la figure 1,
[Fig. 3] illustre schématiquement, dans une vue en perspective du côté de la seconde face, le premier guide de lumière du dispositif d'éclairage des figures 1 et 2, avant le logement de la pièce de protection, et
[Fig. 4] illustre schématiquement, dans une vue en perspective du côté de la seconde face, le premier guide de lumière du dispositif d'éclairage des figures 1 et 2, après le logement de la pièce de protection.

### Description détaillée de l'invention

L'invention a notamment pour but de proposer un dispositif d'éclairage DE ayant des premier G1 et second G2 guides de lumière qui ne se parasitent pas mutuellement sans que cela réduise le volume technique disponible et nécessite l'utilisation d'outillages complexes multi-matériaux ou la définition de moyens de clippage ou de trous filetés.

On considère dans ce qui suit, à titre d'exemple non limitatif, que le dispositif d'éclairage DE est destiné à faire partie d'un véhicule de type automobile, comme par exemple une voiture. Mais l'invention n'est pas limitée à cette application. En effet, le dispositif d'éclairage DE peut être un équipement pouvant être rapporté et utilisé dans de nombreux systèmes ou pouvant faire partie d'un autre équipement faisant lui-même partie d'un système. Ainsi, le dispositif d'éclairage DE peut faire partie de n'importe quel véhicule (terrestre, maritime (ou fluvial), ou aérien), de n'importe quelle installation, y compris de type industriel, de n'importe quel appareil (ou système), y compris de type grand public, et de n'importe quel bâtiment, par exemple.

Par ailleurs, on considère dans ce qui suit, à titre d'exemple non limitatif, que le dispositif d'éclairage DE est destiné à faire partie d'un bloc optique BO constituant un feu arrière d'un véhicule automobile et assurant au moins une fonction photométrique. Mais le bloc optique BO pourrait constituer un feu avant ou un phare (ou projecteur) avant d'un véhicule, par exemple.

De plus, compte tenu des choix qui précèdent, on considère dans ce qui suit, à titre d'exemple non limitatif, que le dispositif d'éclairage DE est destiné à assurer au moins une fonction photométrique de signalisation, comme par exemple une fonction de feu de position. Mais il pourrait également s'agir d'une fonction d'indicateur de changement de direction (ou clignotant), ou d'une fonction de feu de recul, ou d'une fonction de feu de stop), ou d'une fonction de feu de détresse. On notera cependant que l'invention n'est pas limitée aux fonctions photométriques de signalisation. En effet, le dispositif d'éclairage DE, selon l'invention, est un dispositif lumineux pouvant assurer au moins une fonction photométrique de signalisation ou d'éclairage ou d'effet lumineux (éventuellement décoratif). On notera également que lorsque le dispositif d'éclairage DE est destiné à faire partie d'un bloc optique BO constituant un feu avant d'un véhicule automobile, une fonction photométrique de signalisation peut aussi être une fonction de feu de jour (ou DRL (« Daytime Running Light (ou Lamp) » - signalisation lumineuse allumée automatiquement lorsque le véhicule est mis en fonctionnement pendant le jour)).

Dans ce qui précède et ce qui suit la notion « d'avant » est définie par rapport au lieu où sortent les photons participant à la fonction photométrique, et la notion « d'arrière » est définie par rapport au lieu qui est opposé à celui où sortent les photons participant à la fonction photométrique. Par conséquent, la face avant d'un élément est orientée vers l'extérieur, tandis que la face arrière de cet élément est orientée vers l'intérieur et opposée à la face avant.

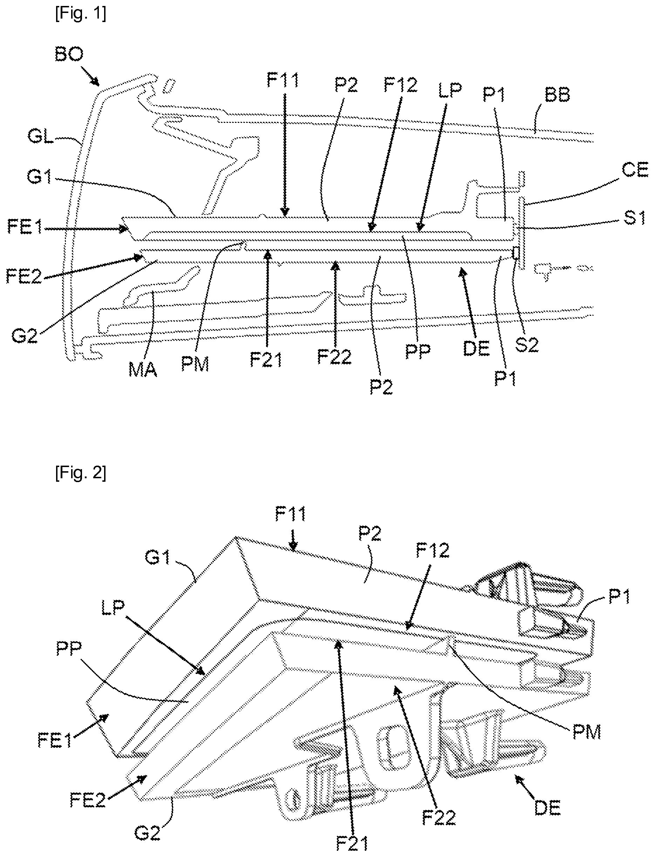

On a schématiquement illustré sur la figure 1, une partie d'un bloc optique BO de véhicule, comprenant un exemple de réalisation d'un dispositif d'éclairage DE selon l'invention.

Le bloc optique BO (ici un feu arrière) comprend, notamment, un boîtier BB (partiellement représenté) délimitant, éventuellement avec une glace de protection GL, une cavité logeant notamment un dispositif d'éclairage DE selon l'invention, ainsi qu'au moins un masque MA. Ce dernier (MA) est destiné à masquer des parties techniques (comme par exemple une première source de photons S1 et une carte électronique CE).

Comme illustré au moins partiellement sur les figures 1 et 2, un dispositif d'éclairage DE, selon l'invention, comprend au moins une première source S1, un premier guide de lumière G1, un second guide de lumière G2 et une pièce de protection PP.

La première source S1 est agencée de manière à générer des photons lorsqu'elle est alimentée en courant électrique. Par exemple, cette première source de photons S1 peut comporter au moins une diode électroluminescente (ou LED (« Light Emitting Diode »)) ou au moins une diode laser ou un laser à gaz ou encore au moins une ampoule (éventuellement au xénon). Le choix du type de la première source de photons S1 peut dépendre de la fonction photométrique à laquelle elle participe.

Egalement par exemple, et comme illustré non limitativement sur la figure 1, la première source de photons S1 peut être installée sur une carte électronique CE qui peut être une carte à circuits imprimés de type PCB (« Printed Circuit Board »).

On notera que dans l'exemple illustré non limitativement sur la figure 1 la première source de photons S1 génère des photons pour le seul premier guide de lumière G1. De ce fait, le dispositif d'éclairage DE comprend aussi une seconde source S2 générant des photons pour le seul second guide de lumière G2. Mais dans une variante de réalisation non illustrée la première source de photons S1 pourrait aussi générer des photons pour le second guide de lumière G2 (et dans ce cas il n'y a pas de seconde source de photons S2).

On notera également que dans l'exemple illustré non limitativement sur la figure 1 la seconde source de photons S2 est installée sur la carte électronique CE comprenant la première source de photons S1. Mais dans une variante de réalisation non illustrée la seconde source de photons S2 pourrait être installée sur une autre carte électronique que celle comprenant la première source de photons S1.

La seconde source S2 est agencée de manière à générer des photons lorsqu'elle est alimentée en courant électrique. Par exemple, cette seconde source de photons S2 peut comporter au moins une diode électroluminescente (ou LED) ou au moins une diode laser ou un laser à gaz ou encore au moins une ampoule (éventuellement au xénon). Le choix du type de la seconde source de photons S2 peut dépendre de la fonction photométrique à laquelle elle participe.

Les photons générés par l'éventuelle seconde source de photons S2 peuvent avoir la même longueur d'onde que ceux qui sont générés par la première source de photons S1. Mais cela n'est as obligatoire.

Par exemple, les premier et second guides de lumière peuvent participer à une même fonction photométrique. Mais cela n'est pas obligatoire. En effet, ils pourraient participer à deux fonctions photométriques différentes. On notera que les premier G1 et second G2 guides de lumière peuvent présenter des couleurs identiques ou bien différentes. Cela peut notamment dépendre de la fonction photométrique à laquelle chacun d'entre eux participe.

Le premier guide de lumière G1 comprend des première P1 et seconde P2 parties qui se prolongent mutuellement.

La première partie P1 du premier guide de lumière G1 est agencée de manière à recevoir les photons générés par la première source S1 et à transférer ces photons dans la seconde partie P2. Cette réception de photons se fait ici au niveau de la face arrière du premier guide de lumière G1, à titre d'exemple. On notera que dans l'exemple illustré le premier guide de lumière G1 est de type plat (ou « flat guide »), car son épaisseur (dans le plan de la figure 1) est petite dans ses première P1 et seconde P2 parties, comparée à ses autres dimensions caractéristiques (longueur et largeur).

La seconde partie P2 du premier guide de lumière G1 comprend des première F11 et seconde F12 faces de réflexion interne, opposées entre elles, et une première face d'extrémité FE1. On comprendra que les photons transférés dans cette seconde partie P2 font l'objet de réflexions internes multiples sur les première F11 et seconde F12 faces de réflexion interne jusqu'à ce qu'ils parviennent au niveau de la première face d'extrémité FE1 par laquelle ils sortent pour participer à une fonction photométrique. La première face d'extrémité FE1 est donc ici la face avant du premier guide de lumière G1, et donc les photons sortent par la tranche de ce dernier (G1).

Le second guide de lumière G2 comprend également des première P1 et seconde P2 parties qui se prolongent mutuellement. La première partie P1 est agencée de manière à recevoir les photons générés (ici) par la seconde source S2 et à transférer ces photons dans la seconde partie P2. Cette réception de photons se fait ici au niveau de la face arrière du second guide de lumière G2, à titre d'exemple. On notera que dans l'exemple illustré le second guide de lumière G2 est aussi de type plat car son épaisseur (dans le plan de la figure 1) est petite dans ses première P1 et seconde P2 parties, comparée à ses autres dimensions caractéristiques (longueur et largeur).

La seconde partie P2 du second guide de lumière G2 comprend des première F21 et seconde F22 faces de réflexion interne, opposées entre elles, et une seconde face d'extrémité FE2 par laquelle sortent les photons transférés. On comprendra que les photons transférés dans cette seconde partie P2 font l'objet de réflexions internes multiples sur les première F21 et seconde F22 faces de réflexion interne jusqu'à ce qu'ils parviennent au niveau de la seconde face d'extrémité FE2 par laquelle ils sortent pour participer à une fonction photométrique. La seconde face d'extrémité FE2 est donc ici la face avant du second guide de lumière G2, et donc les photons sortent par la tranche de ce dernier (G2).

La première face de réflexion interne F21 du second guide de lumière G2 est placée en regard de la seconde face de réflexion interne F12 du premier guide de lumière G1.

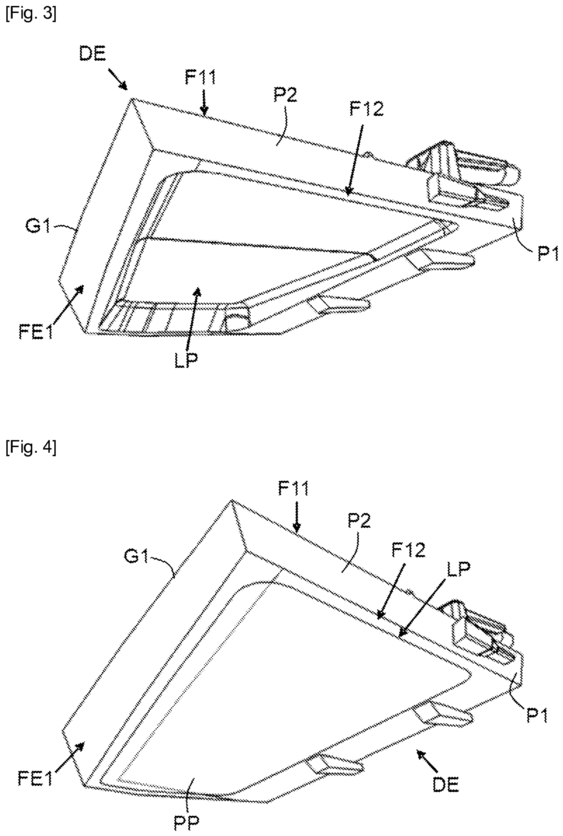

Selon l'invention, et comme illustré non limitativement sur les figures 1 à 4, la seconde partie P2 du premier guide de lumière G1 comprend au niveau de sa seconde face de réflexion interne F12 un logement LP qui est ouvert du côté de la première face de réflexion interne F21 du second guide de lumière G2, comme illustré sur la figure 3. Ce logement LP loge au moins partiellement la pièce de protection PP qui est propre à limiter (autant que possible (et si possible empêcher)) au moins la sortie de photons par la seconde face de réflexion interne F12 de la seconde partie P2 du premier guide de lumière G1, afin de protéger au moins le second guide de lumière G2, et ainsi empêcher les transferts de photons vers ce dernier (G2).

Ainsi, au moins le premier guide de lumière G1 ne parasite pas le second guide de lumière G2, et du fait du logement au moins partiel de la pièce de protection PP dans le logement LP le volume technique disponible est au minimum très peu (et possiblement pas du tout) réduit . En outre, cela permet d'éviter l'utilisation d'outillages complexes multi-matériaux ou la définition de moyens de clippage ou de trous filetés.

De préférence, la pièce de protection PP est aussi propre à limiter (autant que possible (et si possible empêcher)) l'entrée par la seconde face de réflexion interne F12 de la seconde partie P2 du premier guide de lumière G1 de photons sortant par la première face de réflexion interne F21 de la seconde partie P2 du second guide de lumière G2, afin de protéger le premier guide de lumière G1, et ainsi empêcher les transferts de photons vers ce dernier (G1). Dans ce cas, les premier G1 et second G2 guides de lumière ne se parasitent pas mutuellement.

Lorsque le premier guide de lumière G1 est réalisé par moulage d'une matière plastique ou synthétique, son logement LP peut être réalisé en même temps que lui par une adaptation de son moule, ce qui est particulièrement avantageux car cela évite toute intervention additionnelle pour le réaliser. Mais dans une variante de réalisation le logement LP pourrait être réalisé par usinage après la phase de moulage du premier guide de lumière G1. Par exemple, la matière plastique ou synthétique peut être du polycarbonate (ou PC) ou du polyméthacrylate de méthyle (ou PMMA). On notera que le second guide de lumière G2 peut aussi être réalisé par moulage d'une matière plastique ou synthétique, comme par exemple du PC ou PMMA.

De son côté la pièce de protection PP peut être réalisée dans un matériau qui est opaque au moins aux photons générés par la première source S1, et de préférence aussi aux photons générés par l'éventuelle seconde source S2 (en particulier lorsque les photons générés par les premier G1 et second G2 guides de lumière ont des longueurs d'onde différentes).

Par exemple, la pièce de protection PP peut être réalisée par moulage d'une matière plastique ou synthétique. Ce matériau peut, par exemple, être du polycarbonate/acrylonitrile butadiène styrène (ou PC/ABS).

Egalement de préférence, et comme illustré non limitativement sur les figures 1, 2 et 4, le logement LP loge intégralement la pièce de protection PP. Cela permet d'éviter qu'une partie de la pièce de protection PP saille entre les premier G1 et second G2 guides de lumière, et donc que le volume technique disponible soit réduit.

Par exemple, et comme illustré non limitativement sur les figures 1 et 2, la pièce de protection PP peut être maintenue dans le logement LP par le second guide de lumière G2. La pièce de protection PP est alors avantageusement « prise en sandwich » entre les premier G1 et second G2 guides de lumière, sans qu'il faille la solidariser fixement dans le logement LP. Mais dans une variante de réalisation la pièce de protection PP pourrait être solidarisée fixement dans le logement LP, par exemple par collage, soudage ou emmanchement en force. Afin d'assurer le maintien de la pièce de protection PP dans le logement LP, le second guide de lumière G2 peut comprendre sur sa première face de réflexion interne F21 au moins une protubérance PM saillant vers la pièce de protection PP et au contact de cette dernière (PP), comme illustré non limitativement sur les figures 1 et 2. Par exemple, cette protubérance PM peut se présenter sous la forme d'une nervure. Si besoin, la première face de réflexion interne F21 peut comprendre plusieurs (au moins deux) protubérances PM saillant vers la pièce de protection PP et au contact de cette dernière (PP).

Lorsque le second guide de lumière G2 est réalisé par moulage d'une matière plastique ou synthétique, chaque protubérance PM peut être réalisée en même temps que lui par une adaptation de son moule, ce qui est particulièrement avantageux car cela évite toute intervention additionnelle pour le réaliser. Mais dans une variante de réalisation chaque protubérance PM pourrait être réalisée par usinage après la phase de moulage du premier guide de lumière G1 ou bien pourrait être rapportée sur la première face de réflexion interne F21 du second guide de lumière G2, par exemple par collage ou soudage.

## Revendications

1. Dispositif d'éclairage (DE) comprenant i) une source (S1) générant des photons, ii) un premier guide de lumière (G1) recevant dans une première partie (P1) lesdits photons générés afin de les transférer dans une seconde partie (P2) comportant des première (F11) et seconde (F12) faces de réflexion interne, opposées entre elles, et une face d'extrémité (FE1) par laquelle sortent lesdits photons transférés, et iii) un second guide de lumière (G2) placé en regard de ladite seconde face de réflexion interne (F12), **caractérisé en ce que** ladite seconde partie (P2) comprend au niveau de sa seconde face de réflexion interne (F12) un logement (LP) ouvert du côté dudit second guide de lumière (G2) et logeant intégralement une pièce de protection (PP) propre à limiter au moins une sortie de photons transférés par ladite seconde face de réflexion interne (F12) afin de protéger au moins ledit second guide de lumière (G2).

2. Dispositif d'éclairage selon la revendication 1, **caractérisé en ce que** ladite pièce de protection (PP) est maintenue dans ledit logement (LP) par ledit second guide de lumière (G2).

3. Dispositif d'éclairage selon la revendication 2, **caractérisé en ce que** ledit second guide de lumière (G2) comprend au moins une protubérance (PM) saillant vers ladite pièce de protection (PP) et au contact de cette dernière (PP) afin de la maintenir dans ledit logement (LP).

4. Dispositif d'éclairage selon l'une des revendications 1 à 3, **caractérisé en ce que** ladite pièce de protection (PP) est réalisée dans un matériau opaque au moins auxdits photons générés par ladite source (S1).

5. Dispositif d'éclairage selon l'une des revendications 1 à 4, **caractérisé en ce que** l'un au moins desdits premier (G1) et second (G2) guides de lumière est de type dit plat.

6. Bloc optique (BO) propre à équiper un véhicule, **caractérisé en ce qu'**il comprend au moins un dispositif d'éclairage (DE) selon l'une des revendications 1 à 5.

7. Bloc optique selon la revendication 6, **caractérisé en ce que** lesdits photons sortant par ladite face d'extrémité (FE1) du premier guide de lumière (G1) participent à une fonction photométrique de signalisation.

8. Véhicule, **caractérisé en ce qu'**il comprend au moins un bloc optique (BO) selon la revendication 6 ou 7.

9. Véhicule selon la revendication 8, **caractérisé en ce qu'**il est de type automobile.

## Patentansprüche

1. Beleuchtungsvorrichtung (DE) mit i) einer Quelle (S1), die Fotonen erzeugt, ii) einem ersten Lichtleiter (G1), der in einem ersten Teil (P1) die erzeugten Fotonen aufnimmt, um sie in einen zweiten Teil (P2) zu übertragen, der eine erste (F11) und eine zweite (F12) innere Reflexionsfläche aufweist, die einander gegenüberliegen, und eine Endfläche (FE1), aus der die übertragenen Fotonen austreten, und iii) einem zweiten Lichtleiter (G2), der der zweiten inneren Reflexionsfläche (F12) gegenüberliegt, **dadurch gekennzeichnet, dass** der zweite Teil (P2) umfasst an seiner zweiten inneren Reflexionsfläche (F12) eine Aufnahme (LP), die auf der Seite des zweiten Lichtleiters (G2) offen ist und integral ein Schutzteil (PP) aufnimmt, das geeignet ist, mindestens einen Ausgang von Fotonen zu begrenzen, die von der zweiten inneren Reflexionsfläche (F12) übertragen werden, um mindestens den zweiten Lichtleiter (G2) zu schützen.

2. Beleuchtungsvorrichtung nach Anspruch 1, **dadurch gekennzeichnet, dass** das Schutzteil (PP) in dem Gehäuse (LP) durch den zweiten Lichtleiter (G2) gehalten wird.

3. Beleuchtungsvorrichtung nach Anspruch 2, **dadurch gekennzeichnet, dass** der zweite Lichtleiter (G2) mindestens einen Vorsprung (PM) aufweist, der zum Schutzteil (PP) hin und in Kontakt mit diesem (PP) vorsteht, um es in dem Gehäuse (LP) zu halten.

4. Beleuchtungsvorrichtung nach einem der Ansprüche 1 bis 3, **dadurch gekennzeichnet, dass** das Schutzteil (PP) aus einem Material hergestellt ist, das mindestens gegenüber den von der Quelle (S1) erzeugten Fotonen opak ist.

5. Beleuchtungsvorrichtung nach einem der Ansprüche 1 bis 4, **dadurch gekennzeichnet, dass** mindestens einer der ersten (G1) und zweiten (G2) Lichtleiter von der Art ist, die als flach bezeichnet wird.

6. Optische Einheit (BO), die zur Ausrüstung eines Fahrzeugs geeignet ist, **dadurch gekennzeichnet, dass** sie mindestens eine Beleuchtungsvorrichtung (DE) nach einem der Ansprüche 1 bis 5 umfasst.

7. Optische Einheit (BO) nach Anspruch 6, **dadurch gekennzeichnet, dass** die Fotonen, die durch die Endfläche (FE1) des ersten Lichtleiters (G1) austreten, an einer photometrischen Signalfunktion beteiligt sind.

8. Fahrzeug, **dadurch gekennzeichnet, dass** es mindestens einen optischen Einheit (BO) nach Anspruch 6 oder 7 umfasst.

9. Fahrzeug nach Anspruch 8, **dadurch gekennzeichnet, dass** es ein Kraftfahrzeug ist.

## Claims

1. Lighting device comprising i) a source generating photons, ii) a first light guide receiving said generated photons in a first part so as to transfer them into a second part comprising first internal reflection faces F 11 and second internal reflection faces F 12 opposite each other and an end face FE 1 via which said transferred photons exit, and iii) a second light guide placed facing said second internal reflection face F 12, wherein said second part P 2 comprises, at the level of its second internal reflection face F 12, a housing LP on the side of said second light guide G 2 and entirely housing a protective component PP adapted to limit at least one exit of photons transferred by said second internal reflection face (F 12) in order to protect at least said second light guide (G 2).

2. Lighting device according to claim 1, wherein said protective component is held in said housing by said second light guide.

3. Lighting device according to claim 2, wherein said second light guide comprises at least one protuberance projecting towards said protective component and in contact with said protective layer in order to hold it in said housing.

4. Lighting device according to one of claims 1 to 3, wherein said protective component is realised in a material that is opaque at least to said photons generated by said source.

5. Lighting device according to one of claims 1 to 4, **characterised in that** at least one of said first (G1) and second (G2) light guides is of the flat type.

6. Optical unit (BO) suitable for equipping a vehicle, **characterised in that** it comprises at least one lighting device (DE) according to one of claims 1 to 5.

7. Optical unit according to claim 6, wherein said photons leaving said end face of said first light guide participate in a photometric signal function.

8. Vehicle **characterised in that** it comprises at least one optical unit (BO) according to claim 6 or 7.

9. Vehicle according to claim 8, **characterised in that** it is of the automobile type.
